# EUROPEAN PATENT APPLICATION

(11) **EP 3 957 898 A1**
(43) Date of publication of application: **23.02.2022**
(21) Application number: 20191894.3
(22) Date of filing: 20.08.2020
(51) Int. Cl.: F17C 13/00, G01F 23/26, G01F 23/00

(54) **SYSTEM AND METHOD FOR DIGITALLY MONITORING A PRESSURE VESSEL**

(71) Applicant: Hexagon Ragasco AS, 2831 Raufoss (NO)
(72) Inventor: JENSRUD, Vegard, N-2830 Raufoss (NO)
(74) Representative: Onsagers AS

(57) **Abstract**

System and method for digitally monitoring the level of gas in liquid form in a composite pressure vessel made of at least a gas tight inner liner (4) inside a layer of composite material, wherein the system (5) comprises - capacitive measuring unit for measuring the level of gas in liquid form in the pressure vessel, at least two sensor electrodes connected to the capacitive measuring unit, a communication unit for communicating the information measured by the capacitive measuring unit and - a power unit for supplying power to at least one of the at least two electrodes, the capacitive measuring unit and the communication unit.

## Description

### TECHNICAL FIELD

The present invention regards a system and method for digitally monitoring a pressure vessel, and more particularly a system and method for digitally monitoring the level of gas in liquid phase in a pressure vessel using a sensor unit connected to the pressure vessel.

### BACKGROUND OF THE INVENTION

Pressure vessels are widely used over the world to store a wide range of gasses. The gasses are used in fuelling vehicles, in cocking, in oxygen and air pressure vessels used for breathing, pressure vessels used for welding and many other areas. Gasses that is used can be propane, butane, CO₂, O₂, air and many more.

There are several types of pressure cylinders in use, containers made of metals, containers made of composite, and other plastic material, and combinations of these materials. The containers made of composite material can be with or without an inner liner and with or without an outer cover.

Keeping track of the condition of the container and the gas level of the container is important in order to ensure that the container is working properly and to keep track of the fill level of the container. On metal containers the level can be measured by controlling the weight of the container of you have to anticipate the level by the use of the container. Further it is also possible to measure the level of a metal container using ultrasonic waves. Using a composite container, the level of the liquid can be seen through the composite material. In addition, there can be placed a pressure gauge that monitors the pressure in the container.

US20190178696A1 described herein are embodiments of a system for monitoring and detecting a level of a tank storing a material. The system may be used in deciding of whether and/or when to provide additional material to the tank, to refill the tank partially or entirely. In some embodiments, the tank may be disposed at a premise such as a residence or commercial building and the system may be disposed in part at that premises to monitor the level of the material in the tank. In some embodiments, the material may be a fuel and the tank may be a fuel tank, to provide fuel to utilities equipment at the premises. In other embodiments, the tank may include other materials, such as other utilities materials. In some embodiments, the utilities material may be potable water.

US20090301190A1 regards a capacitance sensor assembly for detecting relative movement or position between objects, such as amount of gas left in a tank or reservoir, movement of one machine component with respect to another, and so on, includes one or more antenna probes connected to an integrated chip normally associated with touch-screen displays. Each antenna probe operates independently and may be formed as insulated conductive wires or conductive traces between layers of a stiff or flexible substrate, such as a Printed Circuit Board (PCB), with the substrate material serving as the insulating layers. Each antenna probe has a different length representing different measurement positions or locations between the objects being measured to provide dynamic calibration of the measurement under changing environmental conditions.

A problem with the solutions presented above is that the solutions are intended for measuring the level of fuel in a tank like a fuel tank on a vehicle or similar where the fuel is naturally in liquid form at atmospheric pressure. In these solutions the tank is not a pressurized tank and the tank is connected to a vehicle or a place where the supply of energy to the sensor system is not a problem.

The problem with free standing pressure vessels like e.g. LPG pressure vessels or oxygen pressure vessels is the severe risk of explosion if it leaks. Another problem is that pressure vessels like these can be standing outside and sometimes in remote areas, which makes changing or recharging power sources hard if you were to add sensors that need a power supply to the pressure vessels. Also, if the gas under pressure is a gas that is explosive, there is an issue with what type of energy source that can be used.

### SUMMARY OF INVENTION

The present invention is set forth and characterized in the independent claims, while the dependent claims describe other characteristics of the invention.

In one aspect, the invention provides a system for measuring the level of gas in liquid form in a composite pressure vessel that uses electrical capacitance to perform the measuring, wherein the system comprises: a capacitive measuring unit for measuring the level of gas in liquid form in the pressure vessel, at least two sensor electrodes connected to the capacitive measuring unit, a communication unit for communicating the information measured by the capacitive measuring unit, a power unit for supplying power to the at least one of the at least two electrodes, to the capacitive measuring unit and to the communication unit.

Further, the at least two electrodes comprise at least one transmitting electrode and at least one receiving electrode with interdigitized fingers.

The capacitive measuring unit and the sensor electrodes can be in the form of an elongated strip arranged to extend substantially the vertical height of a liner of the composite pressure vessel.

A sensor unit can have a reference point situated near a first end of the sensor unit to be arranged on the composite pressure vessel at a level where the gas always is in liquid form and a reference point situated near a second end of the sensor unit to be arranged on the composite pressure vessel at a level where the gas is always in gas form.

The power unit can be an energy harvester.

The communication unit can be a short-range radio communication unit for communicating information measured by the capacitive measuring unit to a receiver.

The information displayed to the user can be either the amount of gas left in the pressure vessel or the amount of gas in liquid form in the container.

The receiver can be a display situated on the composite pressure vessel displaying the amount of gas left in the composite pressure vessel.

The system can further comprise a temperature sensor, a pressure sensor and a memory unit.

A second aspect of the present invention regards a method for digitally monitoring the level of gas in liquid form of a composite pressure vessel made of at least a gas tight inner liner inside a layer of composite material, wherein the system comprises a sensor unit attached to the liner of the composite pressure vessel that uses electrical capacitance to measure the amount of gas present in the vessel, wherein the sensor unit comprises: - a capacitive measuring unit for detecting the amount of gas in the pressure vessel, - at least two sensor electrodes connected to the capacitive measuring unit, - a communication unit for communicating the amount of gas left detected by the capacitive measuring unit, and a power unit for supplying power to the capacitive measuring unit, the electrodes and the communication unit; wherein the method comprises the following steps: supplying power from the power unit to the capacitive measuring unit and the communication unit; measuring the amount of gas present in the composite pressure vessel with the capacitive measuring unit, communicating the measured amount of gas left with the communication unit to a memory unit, storing the measured amount of gas in the composite pressure vessel in the memory and/or a receiver and/or a user, and/or displaying the information to a user.

The power unit can be an energy harvester that gathers energy from an ambient radio frequency spectrum.

The receiver can in one aspect be an IoT Gateway that can receive information from a plurality of the pressure vessels.

The system can comprise a temperature sensor for measuring the temperature of the composite pressure vessel when the capacitive measuring unit measures the level of gas in liquid form in the composite pressure vessel.

The composite pressure vessel can be a cylindrical vessel arranged for a vertical alignment of the cylinder axis, wherein the sensor unit is arranged vertically on the inner liner.

This solution provides a digitally monitoring of the fill level of a pressure vessel that is safe to use on any pressure vessel and that is maintenance free and self-calibrating.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a partial cut through of a composite pressure vessel where the sensor unit is connected to a gas tight liner of the composite pressure vessel.
Fig. 2a is a drawing of an embodiment of the present invention illustrating how the invention works.
Fig. 2b is a detailed drawing of the sensor unit.
Fig. 3 is an illustration of how the sensor unit can communicate with the user of the system, communicating using Bluetooth Low Energy (BLE) to a mobile device.
Fig. 4 is an illustration of the sensor unit communicating using BLE to a gateway capable of distributing the information via the internet to a remote destination.
Fig. 5a is an illustration of the systems presented in fig. 3 where the flow of the information between the different parts of the systems is indicated.
Fig. 5b is an illustration of the systems presented in fig. 4 where the flow of the information between the different parts of the systems is indicated.
Fig. 6 is a detailed image of the embodiment presented in figure 4 wherein all the steps of the process and information flow is indicated.

### DETAILED DESCRIPTION

In the following, embodiments of the invention will be discussed in more detail with reference to the appended drawings. It should be understood, however, that the drawings are not intended to limit the invention to the subject-matter depicted in the drawings.

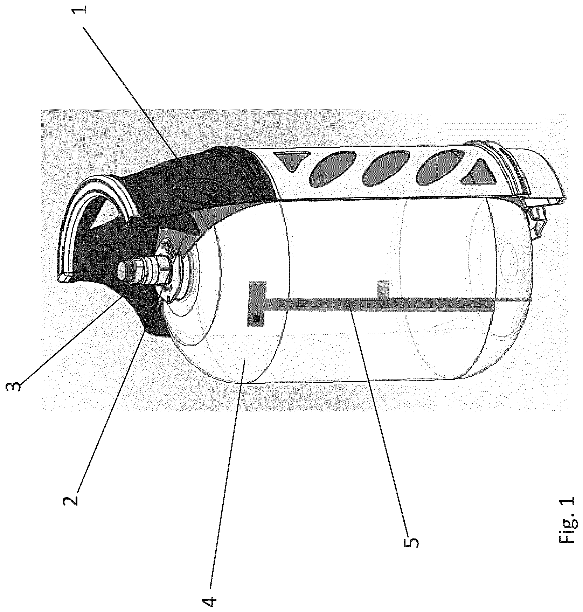

Fig. 1 is a perspective view of a partial cut through of a composite pressure vessel where the sensor unit 5 is connected to a gas tight liner 4 of the composite pressure vessel. A composite pressure vessel for storing gas and/or liquified gas may comprise an inner gas tight liner 4, surrounded by a pressure resistant composite layer 2 of fibres and polymer. The liner 4 and the composite layer 2 comprise at least one common opening wherein a boss is arranged. The boss provides for attaching a valve 3 which is the inlet/outlet means for controlling the flow of fluid in and out of the pressure vessel. An outer casing 1 surrounds the composite layer 2 and provides protection against impact. The outer casing 1 may further provide a stand supporting a vertical arrangement of a cylindrical pressure vessel. The casing 1 may include other features such as handles for transport and adapting the bottom surface and the top surface to each other to allow stacking.

The sensor unit 5 is placed on the side of the liner 4 of the composite pressure vessel. The sensor unit 5 is comprised of sensor electrodes 9 and a capacitive measuring unit 8. The sensor unit 5 has two reference points 6, 11. A first reference point 11 is positioned towards the lower end of the liner 4. This is a reference point for gas in liquid phase. Towards the top end of the liner 4 there is placed a second reference point 6 which is a reference point 6 for gas in gas phase.

The sensor unit 5 can be placed on the inside and outside of the liner 4, on the inside and on the outside of the composite material and on the inside and on the outside of the plastic cover.

The more material there is between the sensor unit 5 and the gas in the pressure vessel the more power is required to perform the measurements. The preferred placements of the sensor unit 5 are therefore as close to the gas as possible without being in contact with it like on the outside of the liner 4 on the composite pressure vessel.

For the sensor unit 5 to function properly the sensor unit 5 is glued to the side of the liner 4. It is important that there is proper contact between the sensor unit 5 and the vessel since the sensor unit 5 must stretch together with the pressure vessel to get accurate measurements.

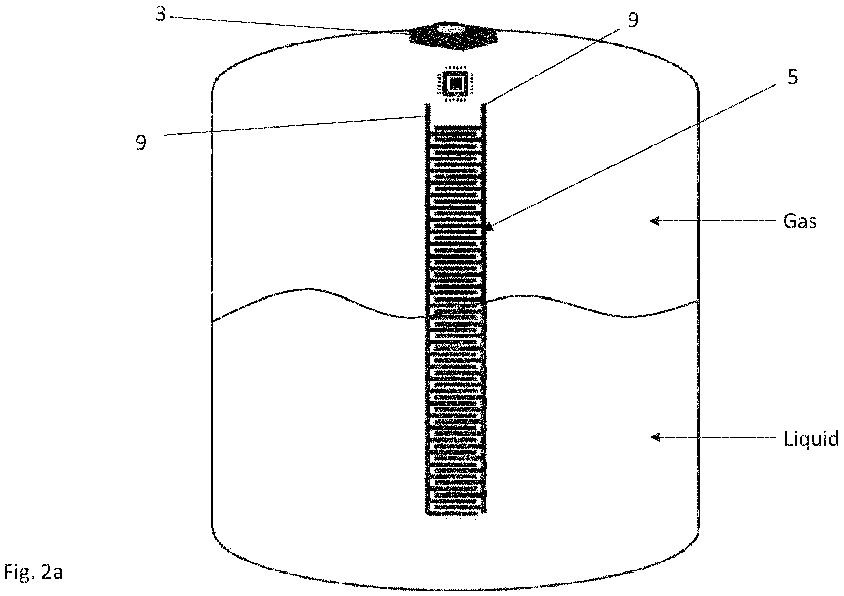

Fig. 2a is a drawing of an embodiment of the present invention illustrating the principle of the invention. The sensor unit 5 is capable of measuring absolute and relative change in the electrical field between at least two electrodes. The electrodes can be copper wires or traces or more suitable geometric shapes such as interdigitated finger pattern, semi-circular pattern or other patterns recognized suitable for those skilled in the art. The ideal pattern utilized is one with high degree of change in Electrical Field/Capacitance while being immune to external noise sources such as a second Electrical Field. In its simplest embodiment the two sensor electrodes 9 form an Electrical Capacitor. This capacitor will be perturbed by the change in dielectric constant along the sensor electrodes 9 based on the amount of liquid gas present in the vessel.

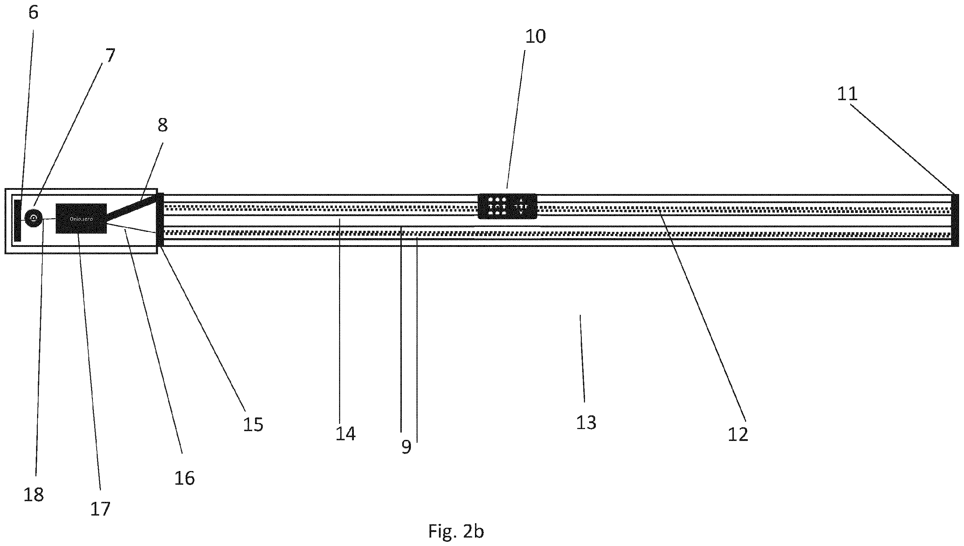

Fig. 2b is a drawing of the sensor unit 5 and the parts it is composed of. In a preferred embodiment of the present invention the sensor unit 5 is in the form of a capacitive measuring unit 8 and sensor electrodes 9. At the first end of the sensor unit 5 there is a reference point 6. This reference point 6 is measuring gas in gas phase. This reference point 6 is placed above the maximum fill level of the pressure vessel. At the opposite end of the sensor unit 5 there is another reference point 11 measuring gas in liquid phase. This reference point 11 measures the gas in liquid phase. If both reference points 6, 11 show the same reading the pressure vessel is either empty and needs refilling or it is overfilled.

The sensor unit 5 has a Bluetooth transmitter, preferably a Bluetooth Low Energy (BLE) transmitter 7. This transmitter can transmit the information gathered by the sensors to a receiver. The receiver can be a mobile phone wherein the measured information can be showed in an app on the phone. Alternatively, the receiver can be an IoT gateway which transmits the information to an internet server where the information can be accessed by a user.

The sensor unit 5 can also be comprised of a pressure sensor 10 and a temperature sensor 18. These sensors can contribute to the surveillance of the condition of the pressure vessel, but they are not necessary to measure the level of the gas in liquid phase.

The pressure sensor can be made up of a double E capacitive sensor. This sensor expands and contract as the pressure in the tank either increases or decreases. The capacitance changes in relation to the expansion and contraction of the sensor. The close contact between the sensor and the pressure vessel has a positive effect on the accuracy of the sensor. Preferably the sensor is either attached to the pressure vessel using a strong adhesive or the sensor is embedded in either the liner, the composite material or the outer casing.

To be able to perform the measurements and to transmit the measurements via BLE, the sensor unit 5 needs a power source. In a preferred embodiment of the present invention the power is supplied by an energy harvesting chip like the chip described in patent applications NO20170555, NO 20181285, NO20181286 and NO20181283. This energy harvesting chip gathers energy from radio waves. In an alternative solution the energy can be harvested by using solar panels attached to the pressure vessel. Both solutions have the benefit that they are maintenance free since they do not need to be recharged in the same way as a battery need. However, a battery can also be used as a power source.

The sensor unit 5 can also be fitted with a memory unit 16. This allows the capacitive measuring unit 8 to store the measurements if the pressure vessel is not in contact with a Bluetooth receiver.

On the backside of the sensor unit 5 there is a layer of adhesive material which ensures that the sensor unit 5 has a good attachment to the surface of the pressure vessel it is attached to.

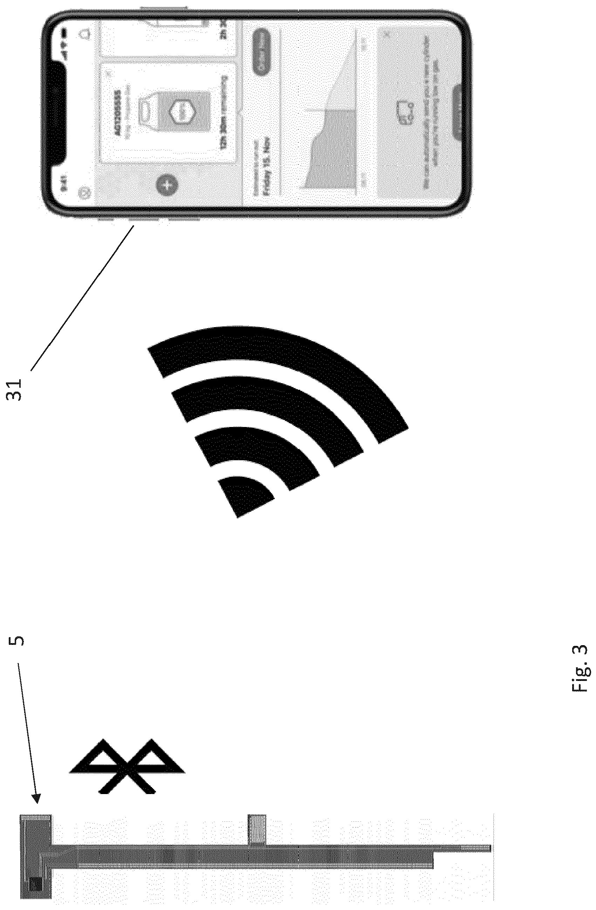

Fig. 3 is an illustration of how the sensor unit 5 can communicate with the user of the system, communicating using BLE 7 to a mobile device 31. This solution allows the user to be able to access the information gathered by the sensor unit 5 and check the level of gas left in the pressure vessel. The connection can be initiated by the user or by the BLE 7 on the sensor unit 5. If it is accessed by the user, the latest stored information can be transmitted, or the sensor unit 5 can perform an on the spot measurement. Alternatively, the BLE 7 on the sensor unit 5 can initiate a transmission of information if the receiver is within transmitting range. The information is in the form of the level of gas in liquid phase in the pressure vessel. The app in the mobile device will be able to keep track of the gas level in the pressure vessel.

The information can be shown to the user as either the level of gas in liquid phase or as the amount of gas left in the pressure vessel. The amount of gas left in the pressure vessel is calculated using the level of gas in liquid phase, the pressure in the pressure vessel and the volume of the pressure vessel. The amount of gas left in the pressure vessel can be displayed as a percentage of the maximum amount of gas allowed in the pressure vessel.

If the app registers that the pressure in the vessel is reduced without it being in use an alarm can be given. Further if the sensor unit 5 registers that the gas level in the container is rapidly decreasing it can transmit an alarm to the receiver that something might be wrong.

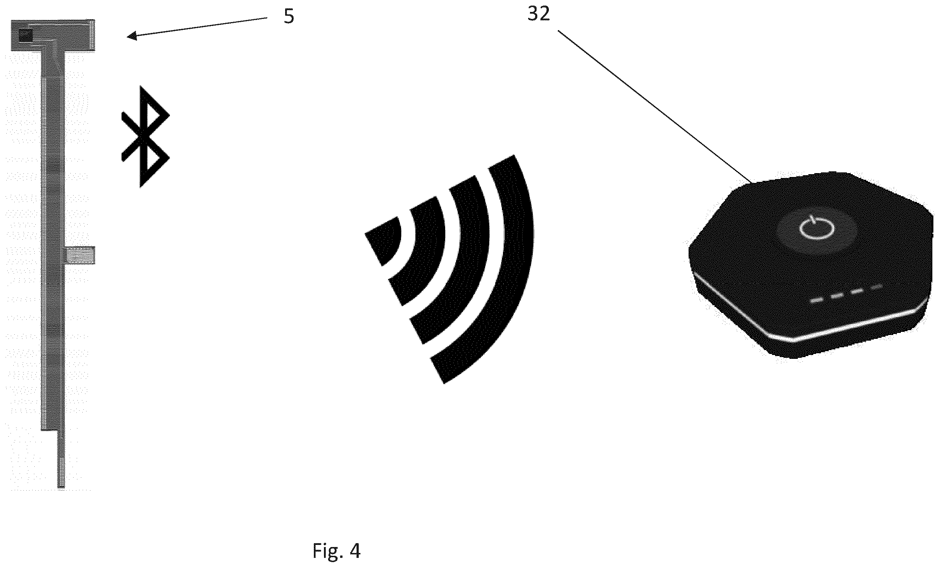

Fig. 4 is an illustration of the sensor unit 5 communicating using BLE 7 to a gateway 32 capable of distributing the information via the internet to a remote destination. In an alternative solution the BLE 7 on the pressure vessel can be connected to a receiver in the form of an Internet of Things (IoT) gateway. The gateway can transmit the measured information to an Internet database where the information can be accessed by a third party. This solution allows the pressure vessel supplier with a possibility to keep track of the gas level in the pressure vessels. This allows them to change the gas for a customer without the customers involvement. In this solution several pressure vessels can be connected to one IoT gateway, wherein each of the pressure vessels has a sensor unit 5 attached in order to transmit their individual level via the IoT gateway to the service provider.

Further the service provider can be informed if there are any unnatural leakage of gas from the pressure vessel.

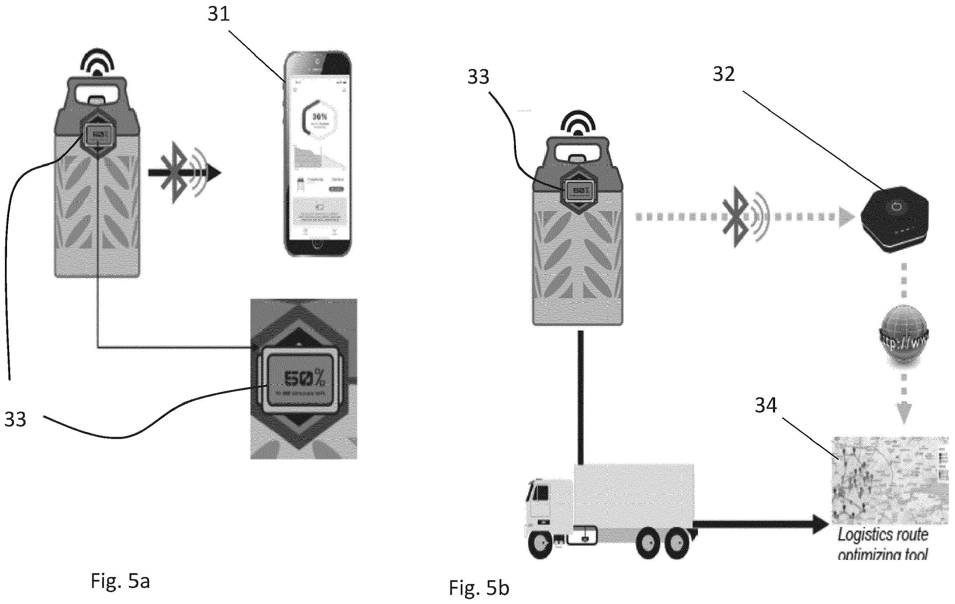

Fig. 5a is an illustration of the systems presented in fig. 3 where the flow of the information between the different parties of the systems is indicated. The sensor unit 5 attached to the composite pressure vessel sends the measured information to a mobile communication device 31 when it is within range of the communication unit 7 of the system. The measured information can be displayed in an app on the mobile communication device 31. If the displayed information reveals that the composite pressure vessel is empty, or close to empty the user can change the composite pressure vessel to a new filled composite pressure vessel. As an alternative solution the measured information can be displayed on a digital display 33 situated on the pressure vessel. The digital display 33 can be in addition to the app om the mobile communication device 31. Alternatively, the digital display 33 can be instead of the app on the mobile communication device.

Fig. 5b is an illustration of the systems presented in and fig. 4 where the flow of the information between the different parties of the systems is indicated. The communication device of the composite pressure vessel sends the measured information to an internet gateway 32. The internet gateway 32 sends the information to e.g. a site on the internet. The information can be accessed by a third party 34. The third party can be a supplier of composite pressure vessels. When the measured gas level of the composite pressure vessel shows that it is below a set threshold level the supplier can change the pressure vessel to a full one. The supplier can keep track of multiple pressure vessel placed in multiple places.

In order to keep track of the individual pressure vessels each vessel can be fitted with a unique ID. This makes it possible to store historical data related to each individual composite pressure vessel. The location of all the pressure vessel that the supplier is responsible for can be displayed in a map in order to make it easier for the supplier to find out where an empty pressure vessel is located. Alternatively, it can be stored as information in a data sheet.

When an empty pressure vessel is collected the supplier can fill the vessel and relocate it to another location. The supplier can put in the new location of the pressure vessel into datasheet or mark it on the map. Alternatively, each composite pressure vessel can be fitted with a satellite navigation unit that allows the supplier to keep track of the pressure vessel in real time. This makes it possible to keep track of the pressure vessel even if it has been moved.

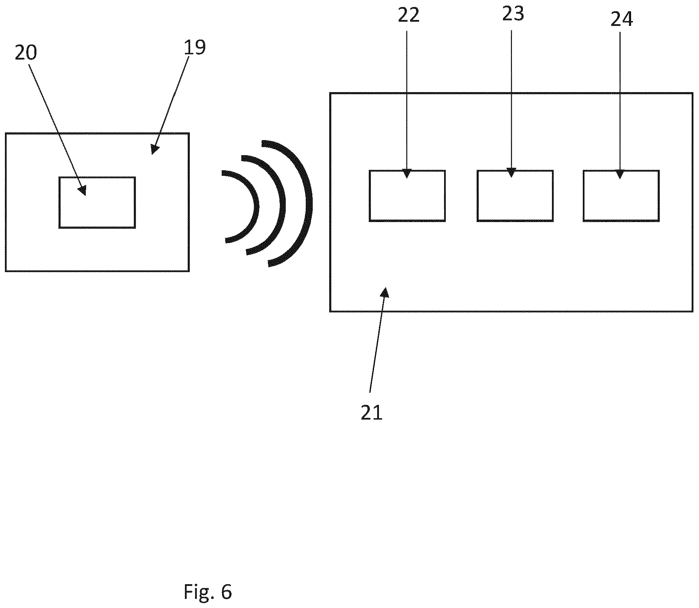

Fig. 6 is a detailed image of the embodiment presented in figure 4 wherein all the steps of the process and information flow is indicated. It is displayed that the composite pressure vessel (LPG Cylinder) 19 has an asset management platform 20. This platform 20 collects information about the individual pressure vessels 19. The collected data is sent to a Multicloud Management Platform (MCMP) 21. The MCMP 21 is comprised of a billing, rating and payment module 22 that keeps track of the billing, rating and payment related to each individual pressure vessel 19. Further the MCMP 21 can have a data management module 23. The data management module 23 stores and analyses the information sent from each pressure vessel 19. It can further keep track of the technical information related to each pressure vessel 19. Further the MCMP 21 can have one or more communication interfaces 24. The communication interfaces 24 can be a web interface, it can be a telecommunication interface (GSM networks) and additional networks like satellite navigation interface like GPS interface (Tracking device).

In addition to only measuring the gas level of the pressure vessel it is possible to keep track of the number of times the pressure vessel has been refilled.

### REFERENCE LIST:

1: Casing
2: Composite layer
3: Valve
4: Inner liner
5: Sensor unit
6: Point of reference «always gas phase»
7: Bluetooth Low Energy transmitter/communication unit
8: Capacitive measuring unit
9: Sensor electrodes
10: Pressure sensor
11: Point of reference «always liquid phase»
12: Flex
13: Backside surface
14: Capacitance measuring line
15: NTC
16: Memory unit
17: Power unit/energy harvester
18: Temperature sensor
19: Composite pressure vessel (LPG Cylinder)
20: Asset management platform
21: Multicloud Management Platform (MCMP)
22: Billing, rating and payment module
23: Data management module
24: Communication interface
31: Mobile device
32: Gateway
33: Digital display
34: Third party receiver

## Claims

1. System for measuring the level of gas in liquid form in a composite pressure vessel that uses electrical capacitance to perform the measuring
**characterised in that** the system comprises:
• a capacitive measuring unit (8) for measuring the level of gas in liquid form in the pressure vessel,
• at least two sensor electrodes (9) connected to the capacitive measuring unit (8),
• a communication unit (7) for communicating the information measured by the capacitive measuring unit (8), and
• a power unit (17) for supplying power to at least one of the at least two electrodes, the capacitive measuring unit (8) and the communication unit (7).

2. System according to claim 1 wherein the at least two electrodes comprise at least one transmitting electrode and at least one receiving electrode with interdigitized fingers.

3. System according to claim 1 or 2 wherein the capacitive measuring unit (8) and the sensor electrodes (9) is in the form of an elongated strip arranged to extend substantially the vertical height of an inner liner of the composite pressure vessel.

4. System according to any one of the claims 2-3 wherein a sensor unit (5) has a reference point (11) situated near a first end of the sensor unit (5) to be arranged on the composite pressure vessel at a level where the gas always is in liquid form and a reference point (6) situated near a second end of the sensor unit (5) to be arranged on the composite pressure vessel at a level where the gas is always in gas form.

5. System according to any one of the claims 1-4 wherein the power unit (17) is an energy harvester (17).

6. System according to any one of the claims 1-5 wherein the communication unit (7) is a short-range radio communication unit (7) for communicating information measured by the capacitive measuring unit (8) to a receiver (31, 32, 33, 34).

7. System according to claim 6 wherein the information displayed to the user can be either the amount of gas left in the pressure vessel or the amount of gas in liquid form in the vessel.

8. System according to claim 6 wherein the receiver is a display (33) situated on the composite pressure vessel displaying the amount of gas left in the composite pressure vessel.

9. System according to any one of the claims 1-8 wherein the system further comprises a temperature sensor (18), a pressure sensor (10) and a memory unit (16).

10. Method for digitally monitoring the level of gas in liquid form in a composite pressure vessel made of at least a gas tight inner liner (4) inside a layer of composite material, wherein the system comprises a sensor unit (5) attached to the liner of the composite pressure vessel that uses electrical capacitance to measure the amount of gas present in the vessel, wherein the sensor unit (5) comprises: - a capacitive measuring unit (8) for detecting the amount of gas in the pressure vessel, - at least two sensor electrodes (9) connected to the capacitive measuring unit (8), - a communication unit (7) for communicating the amount of gas left detected by the capacitive measuring unit (8), and a power unit (17) for supplying power to the capacitive measuring unit (8), the electrodes (9) and the communication unit (7);
wherein the method comprises the following steps:
• supplying power from the power unit (17) to the capacitive measuring unit (8), at least one of the electrodes (9) and the communication unit (7);
• measuring the amount of gas present in the composite pressure vessel with the capacitive measuring unit (8) utilizing absolute or relative changes in electrical capacitance,
• communicating the measured amount of gas present with the communication unit (7) to
i. a memory unit (16), storing the measured amount of gas present in the composite pressure vessel in the memory and/or
ii. a receiver (31,32, 33,34) and/or
iii. a user (31, 33, 34), and/or
iv. displaying the information to a user (31,33).

11. Method according to claim 10 wherein the power unit (17) is an energy harvester (17) that gathers energy from an ambient radio frequency spectrum.

12. Method according to ant one of the claims 10-11 wherein the system comprises a temperature sensor (18) for measuring the temperature of the composite pressure vessel and a pressure sensor (10) for measuring the pressure within the pressure vessel, and the method comprises calculating the amount of gas in the composite pressure vessel based on the measured temperature, the measures pressure and the measured level of gas in liquid form in the composite pressure vessel.

13. A composite pressure vessel comprising a system for measuring the amount of gas left according to any one of the claims 1-9.

14. Composite pressure vessel according to claim 13, wherein the composite pressure vessel is a cylindrical vessel arranged for a vertical alignment of the cylinder axis, wherein the sensor unit (5) is arranged vertically on the inner liner (4).
